# EUROPÄISCHE PATENTSCHRIFT

(11) **EP 2 865 906 B1**
(45) Veröffentlichungstag und Bekanntmachung des Hinweises auf die Patenterteilung: **10.10.2018**
(21) Anmeldenummer: 14193797.9
(22) Anmeldetag: 07.05.2014
(51) Int. Cl.: F16C 11/06

(54) **Gelenkzapfen mit einem Gelenkkopf aus Kunststoff**
Pivot stud with a pivot head of synthetic resin
Pivot à rotule avec une tête de rotule en matière plastique

(30) Priorität: 16.05.2013 DE 102013008342; 24.06.2013 DE 102013211957; 22.08.2013 DE 102013216728
(43) Veröffentlichungstag der Anmeldung: 29.04.2015
(62) Teilanmeldung aus: 14167403.6
(73) Patentinhaber: Springfix Befestigungstechnik GmbH, 73084 Salach (DE)
(72) Erfinder: Ecker, Rainer, 73033 Göppingen (DE); González, Carlos, 89558 Böhmenkirchen (DE)
(74) Vertreter: Patent- und Rechtsanwälte Ullrich & Naumann

(56) Entgegenhaltungen:
- EP-A1- 1 357 306
- EP-A2- 0 702 161
- EP-A2- 1 418 349
- DE-A1-102007 023 245
- DE-U- 1 854 243
- FR-A- 845 561
- US-A- 2 862 740
- US-A- 2 879 091

## Beschreibung

Die Erfindung betrifft einen Gelenkzapfen, insbesondere zur Sensoransteuerung in einem Fahrzeug, mit einem einen ersten Abschnitt und einen zweiten Abschnitt aufweisenden Gelenkkörper, wobei an dem ersten Abschnitt des Gelenkkörpers ein Gelenkkopf angeordnet ist, wobei der Gelenkkörper aus Metall und der Gelenkkopf aus Kunststoff hergestellt ist und wobei an dem ersten Abschnitt ein Sicherungsbereich ausgebildet ist, an dem der Gelenkkopf verdreh- und abzugssicher angeordnet ist.

Gelenkzapfen der in Rede stehenden Art sind seit Jahren aus der Praxis bekannt und werden insbesondere als Teil eines Gestänges zur Sensoransteuerung in Fahrzeugen verwendet. Dabei wird der Gelenkzapfen in einer Gelenkpfanne gehalten, um somit ein Gelenk auszubilden. Derartige Gelenke werden bspw. für Turbolader-Verstellgestänge eingesetzt.

Aufgrund dieses Einsatzgebietes sind derartige Gestänge und somit auch die Gelenkzapfen extremen Bedingungen - Wasser, Eis, Staub, Schmutz, Steine, Vibrationen, starken Temperaturschwankungen, großer Hitze - ausgesetzt. Die Gelenkzapfen bestehen dabei üblicherweise aus Metall und weisen zum Schutz gegen Korrosion eine Oberflächenbeschichtung auf. Während des Betriebs wird die Schutzschicht abgerieben, wobei dieser Verschleiß aufgrund der extremen Umgebungsbedingungen mitunter schnell auftritt. Das somit freiliegende blanke Metall beginnt zu korrodieren, was zu einer Zerstörung des Gelenkes führt.

Zur Lösung dieses Problems ist aus der EP 0 836 019 A1 vorbekannt, eine gattungsbildende Gelenkverbindung durch eine Schutzlippe derart abzuschirmen, dass Staub, Schmutz oder Feuchtigkeit nicht in die Gelenkverbindung eintritt.

Aus den Dokumenten EP 0 702 161 A2, DE 1 854 243 U, US 2 879 091 A, US 2 862 740 A, FR 845 561 A, EP 1 418 349 A2 und EP 1 357 306 A1 sind jeweils Gelenkzapfen mit einem Gelenkkörper aus Metall und einem Gelenkkopf aus Kunststoff bekannt, die an einem Sicherungsbereich des Gelenkkörpers angeordnet sind. Die EP 0 702 161 A2 zeigt als Sicherungsbereich einen konischen Abschnitt der mit Einkerbungen versehen ist. Die

FR 845 561 A zeigt einen als gebogenen Kragen ausgebildeten Sicherungsbereich.

Die DE 43 09 226 A1 zeigt eine Gelenkverbindung für einen Fahrzeugniveaugeber, bei der ein Faltenbalg vorgesehen ist, um das Gelenk vor widrigen Umgebungsbedingungen zu schützen.

Bei den bekannten Konstruktionen ist jedoch problematisch, dass diese aufwendig und damit kostenintensiv in der Herstellung sind. Ferner verschleißt sowohl ein Faltenbalg als auch eine Schutzlippe, so dass die Funktionalität dieser Schutzmaßnahmen lediglich kurzfristig gegeben ist.

Des Weiteren ist aus dem Stand der Technik vorbekannt, Gelenkzapfen aus Kunststoff herzustellen. Diese korrodieren zwar nicht, können jedoch nicht mit den benötigten Drehmomenten angezogen bzw. mit gleich hohen Querkräften wie ein Gelenkzapfen aus Stahl belastet werden. Somit stellen Gelenkzapfen aus Kunststoff keine geeignete Alternative zu Gelenkzapfen aus Stahl dar.

Der vorliegenden Erfindung liegt daher die Aufgabe zugrunde, einen Gelenkzapfen der eingangs genannten Art derart auszugestalten und weiterzubilden, dass der Gelenkzapfen mit hohen Drehmomenten und Querkräften belastbar ist und möglichst geringem Verschleiß unterliegt.

Erfindungsgemäß wird die voranstehende Aufgabe durch die Merkmale des Anspruches 1 gelöst. Danach ist der in Rede stehende Gelenkzapfen dadurch gekennzeichnet, dass der erste Abschnitt zumindest bereichsweise hohl ausgebildet ist, dass der hohl ausgebildete erste Abschnitt an seiner Stirnseite mit einem Stempel gestaucht ist und dass die sich dadurch ergebende Wulst als Hinterschneidung wirkt, an der der Gelenkkopf verdreh-und abzugssicher angeordnet ist.

In erfindungsgemäßer Weise ist zunächst erkannt worden, dass die zugrundeliegende Aufgabe durch eine geschickte Ausgestaltung von Gelenkkopf und Gelenkkörper in überraschend einfacher Weise gelöst werden kann. Dazu ist der Gelenkkopf aus Kunststoff und der Gelenkkörper aus Metall hergestellt. Somit ist ein korrodieren des Gelenkkopfs nahezu ausgeschlossen, wobei der Gelenkzapfen aufgrund des metallischen Gelenkkörpers mit hohen Drehmomenten angezogen bzw. Querkräften belastet werden kann. Entgegen eines Vorurteils der Fachwelt ist Kunststoff per se nicht ungeeignet zum Einsatz in Gelenkzapfen. Durch die raffinierte Kombination des Gelenkkopfes aus Kunststoff mit dem Gelenkkörper aus Metall werden die Vorteile beider Werkstoffe in idealer Weise ausgenutzt. Somit ist ein stark belastbarer Gelenkzapfen realisiert, der kaum einem Verschleiß unterliegt und auch bei härtesten Umgebungsbedingungen einsetzbar ist.

In besonders vorteilhafter Weise ist der Gelenkkörper aus Stahl hergestellt und weist somit die stahlspezifischen extremen Belastbarkeiten auf. Ein weiterer Vorteil eines stählernen Gelenkkörpers besteht in den vielfältigen Bearbeitungsmöglichkeiten, die Stahl bietet. Bei dem Stahl kann es sich um vergütbaren oder nicht-vergütbaren Stahl handeln. Des Weiteren kann der Gelenkkörper aus beliebigen Metallen - bspw. Aluminium oder Niromaterial - hergestellt sein, sofern diese den spezifischen Belastungen standhalten. Als Niromaterial kann bspw. x8CrNiS 18-9, x5CrNi 18-10 oder x5CrNiMo 17-12-2 verwendet werden.

Um den Gelenkkörper noch beständiger auszugestalten, kann dieser zum Schutz gegen Korrosion zumindest teilweise oberflächenbeschichtet sein. Idealerweise ist die gesamte Oberfläche des Gelenkkörpers mit einer Schutzschicht gegen Korrosion ausgestattet.

In besonders vorteilhafter Weise ist zwischen dem ersten Abschnitt und dem zweiten Abschnitt des Gelenkkörpers ein Angriffsbereich für ein Werkzeug ausgebildet. Hierbei kann es sich bspw. um ein Sechskant handeln. Der Gelenkkörper kann bspw. aus dem Schraubenrohling einer Sechskantschraube hergestellt sein. In weiter vorteilhafter Weise kann zwischen dem ersten Abschnitt und dem zweiten Abschnitt des Gelenkkörpers eine mit einem Anschraubgegenstück korrespondierende Verdrehsicherung ausgebildet sein.

Zur einfachen Verbindung des Gelenkzapfens mit dem weiteren Gestänge einer Sensorenansteuerung kann der zweite Abschnitt ein Außengewinde aufweisen. Das Gewinde kann spanend oder spanlos gefertigt sein, bspw. in den zweiten Abschnitt eingeschnitten oder eingepresst sein. Von besonderem Vorteil ist es, wenn das Gewinde bereits vor einer etwaigen Vergütung des Gelenkzapfens gefertigt ist.

Je nachdem, um was für einen Gelenk es sich handelt, kann der Gelenkkopf die Form einer Kugel, eines Kugelabschnitts, eines Ellipsoids oder eines Ellipsoidabschnitts aufweisen. Denkbar ist jedwede Geometrie des Gelenkkopfes, die in einer mit dem Gelenkkopf korrespondierenden Gelenkpfanne passt. Des Weiteren ist denkbar, dass der Gelenkkopf an seinem dem ersten Abschnitt zugewandten Ende einen halsförmigen Bereich aufweist und sich damit im Sinne einer Schutzschicht über einen Teil des ersten Abschnitts hinweg erstreckt. Somit ist dieser ansonsten freiliegende Teil des ersten Abschnitts auf besonders einfache Weise vor Beschädigungen und Korrosion geschützt. An dieser Stelle sei darauf hingewiesen, dass der Gelenkkopf an seiner Oberfläche fertigungsbedingt eine oder mehrere Narben bzw. Grate aufweisen kann. Diese können als Fett-/Schmutzauffang dienen und dadurch die Reibung zwischen Gelenkkopf und Gelenkpfanne verringern.

In besonders vorteilhafter Weise ist der Gelenkkopf an dem ersten Abschnitt des Gelenkkörpers spritzgusstechnisch oder sintertechnisch angeformt. Durch das Spritzgießen des Gelenkkopfes kann der Abstand zwischen dem Angriffsbereich für ein Werkzeug und der Gelenkkopfmitte variiert werden, indem man die Lage des Gelenkkörpers im Spritzgusswerkzeug verändert. Hierzu müssen lediglich Wechseleinsätze unterschiedlicher Länge in das Spritzgusswerkzeug eingelegt werden. Somit können auch Gelenkköpfe mit unterschiedlichen Durchmessern an Gelenkkörpern mit gleichen Abmessungen fixiert werden, da die Lage des Gelenkkörpers im Spritzgusswerkzeug veränderbar ist.

In weiter vorteilhafter Weise ist der Gelenkkopf auf den ersten Abschnitt aufgepresst oder in den ersten Abschnitt eingebettet, so dass mit verblüffend einfachen Mitteln eine ideale Verbindung zwischen Gelenkkopf und Gelenkkörper geschaffen ist.

Um den besonderen Beanspruchungen des Gelenkkopfes Rechnung zu tragen, kann dieser aus Polyoxymethylen (POM), Polyamid (PA), Polyphthalamiden (PPA), Perfluorkautschuk (FFKM bzw. FFPM) oder Polyimiden hergestellt sein. Jeder dieser Kunststoffe kann mit zweckmäßigen Füll-, Ergänzungs- und Verstärkungsmitteln angereichert sein, um einen ideal belastbaren Gelenkkopf zu erzeugen. Als Füllstoffe können beispielsweise Verstärkungsstoffe aus Glas oder Kohlenstoff dienen. Ferner können Schmiermittel zugesetzt werden, beispielsweise Polytetrafluorethylen (PTFE), Molybdändisulfid (MoS2), Grafit oder Silikonöl. Wesentlich ist hierbei, dass der Gelenkkopf eine hohe Temperaturbeständigkeit, geringe Reibwerte, höchste Verschleißfestigkeit und gute Zähigkeit bei ausreichender Steifigkeit in der Verbindung aufweist.

In erfindungsgemäßer Weise ist an dem ersten Abschnitt des Gelenkkörpers ein Sicherungsbereich ausgebildet, an dem der Gelenkkopf verdreh- und abzugssicher angeordnet ist. Dabei kann an dem ersten Abschnitt mindestens eine Materialausnehmung und eine sich an die Materialausnehmung anschließende Materialerhebung ausgebildet sein. Die Materialausnehmung kann bspw. als Einschnitt oder Kerbe ausgebildet sein. Idealerweise sind mehrere Materialausnehmungen mit entsprechenden Materialerhebungen vorgesehen. Der erste Abschnitt des Gelenkkörpers kann in weiter vorteilhafter Weise rund oder eckig ausgebildet sein. Erfindungsgemäß ist der erste Abschnitt - zumindest bereichsweise - hohl ausgebildet. Die Materialausnehmungen und Materialerhebungen können an der dadurch vorhandenen Mantelaußenfläche des hohlen ersten Abschnitts ausgebildet sein. Ferner können an der Mantelinnenfläche des hohlen ersten Abschnitts Materialerhebungen und/oder Materialausnehmungen ausgebildet sein, um dadurch eine weitere Verdreh- und Abziehsicherung zu bilden. Schließlich ist zusätzlich oder alternativ denkbar, dass die Mantelinnenfläche des ersten Abschnitts rund oder profiliert - bspw. eckig - ausgebildet ist. Um eine weitere Verdreh-/Abziehsicherung zu erhalten, ist der hohl ausgebildete erste Abschnitt an seiner Stirnseite mit einem Stempel gestaucht. Die sich dadurch ergebende Wulst wirkt als Hinterschneidung, an der der Gelenkkopf in idealer Weise verdreh- und abzugssicher angeordnet ist.

In ganz besonders vorteilhafter Weise ist die Materialausnehmung aus dem ersten Abschnitt herausgeschabt, wobei das dadurch aufgestauchte Material die Materialerhebung bildet. Dabei ist wesentlich, dass die Schabekräfte geringer als die Stauchkräfte des Gelenkkörpers sind, um ein Stauchen des Gelenkkörpers zu vermeiden. Durch diese konstruktive Maßnahme ist ein Gelenkzapfen angegeben, dessen erster Abschnitt derart schmal ausgebildet ist, dass der geforderte Kippwinkel von ± 20° gegenüber der Gelenkpfanne erreicht wird. Der so erzeugte Sicherungsbereich des Gelenkkörpers kann in dem gleichen Presswerkzeug gefertigt werden, in dem der Gelenkkörperrohling mit dem Gewinde bzw. des Angriffsbereichs für ein Werkzeug versehen wird. Wesentlich ist hierbei, dass die Materialausnehmung bzw. Schabung nicht zu lang und zu tief ausgebildet sein darf, da sonst Rissbildung an der Materialerhebung bzw. dem Aufwurf eintritt. Ferner darf die Materialausnehmung nicht zu kurz bzw. zu flach ausgebildet sein, da ansonsten die mechanischen Anforderungen an die Verbindung des Kunststoffes nicht erfüllt sind. Die Geometrien der Materialausnehmung/Materialausnehmungen bzw. der Materialerhebung/Materialerhebungen ergeben sich durch die maximal zulässigen Stauchkräfte des verwendeten Materials und den Einbauverhältnissen des Gelenkzapfens. Beispielsweise bei einem aus einer M6-Schraube aus vergütbarem Stahl gefertigten Gelenkkörperrohling mit einem Durchmesser des ersten Bereichs von 4 mm und einem Abstand von Gelenkkörpermitte bis zur Auflage der Angriffsbereich für ein Werkzeug von 12 mm, ist eine Materialausnehmung von 1 bis 2 mm besonders vorteilhaft. Bei einem Gelenkkörperrohling aus nicht-vergütbaren Stahl mit weniger Anteil an Kohlenstoff, kann die Materialausnehmung deutlich länger ausgebildet werden, ohne dass sich Risse bilden. An dieser Stelle sei nochmals darauf hingewiesen, dass generell mehrere Materialausnehmungen mit dazu korrespondierenden Materialerhebungen vorgesehen sein können.

Schließlich ist denkbar, dass der Sicherungsbereich durch Bördeln, Drehen oder Rändeln erzeugt wird. Wesentlich ist dabei lediglich, dass der erste Abschnitt derart schmal ausgebildet ist, dass der geforderte Kippwinkel von ± 20° gegenüber der Gelenkpfanne erreicht wird. Folglich ist ein Stauchen des Gelenkkörpers zu vermeiden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines Ausführungsbeispiels anhand der Zeichnung zu verweisen. In Verbindung mit der Erläuterung des Ausführungsbeispiels anhand der Zeichnung werden auch im Allgemeinen bevorzugte Ausgestaltungen und Weiterbildungen der Lehre erläutert. In der Zeichnung zeigen
- Fig. 1: ein Ausführungsbeispiel eines Gelenkkörpers in einer schematischen, perspektivischen Darstellung,
- Fig. 2: in schematischer Darstellung eine Seitenansicht eines Gelenkzapfens,
- Fig. 3: die perspektivische Darstellung des Gelenkzapfens gemäß Fig. 2 und
- Fig. 4: die Draufsicht auf einen Gelenkzapfen.

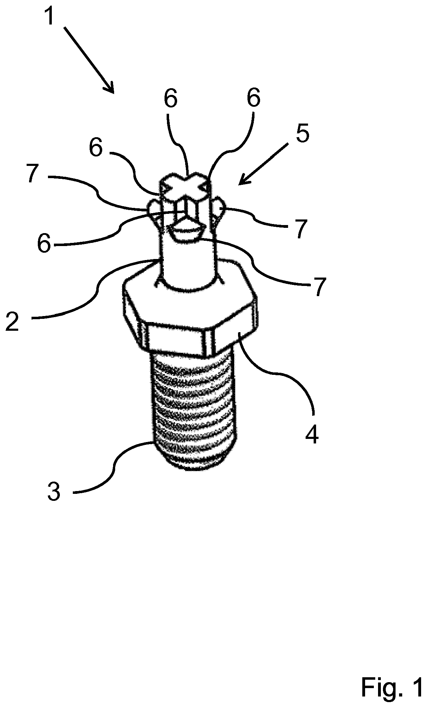

Fig. 1 zeigt ein Ausführungsbeispiel eines Gelenkkörpers 1 in einer schematischen, perspektivischen Darstellung. Der Gelenkkörper 1 ist aus Metall - vorzugsweise Stahl - hergestellt und weist einen ersten Abschnitt 2 und einen zweiten Abschnitt 3 auf. Zwischen dem ersten Abschnitt 2 und dem zweiten Abschnitt 3 ist ein Angriffsbereich 4 in Form eines Sechskants ausgebildet. Der zweite Abschnitt 3 weist ein Gewinde auf, so dass der Gelenkkörper 1 mit einem Sechskantschlüssel in das Gestänge einer Sensoransteuerung einschraubbar ist. Da der Gelenkkörper 1 aus Metall hergestellt ist, kann er mit hohem Drehmoment eingeschraubt werden und hält auch starken Querkräften stand.

Zur Herstellung des Gelenkkörpers 1 können gängige metrische Schrauben mit Sechskantkopf sowie einem Zusatzzapfen zur Bildung des ersten Abschnitts 2 verwendet werden.

Im ersten Abschnitt 2 des Gelenkkörpers 1 ist ein Sicherungsbereich 5 vorgesehen. Der Sicherungsbereich 5 weist vier Materialausnehmungen 6 sowie sich daran anschließende Materialerhebungen 7 auf. Im Konkreten sind die Materialausnehmungen 6 in den ersten Abschnitt 2 hineingeschabt, wobei das geschabte Material die Materialerhebungen 7 bildet. Die Materialerhebungen 7 dienen als Abzugshinterschnitt für den Gelenkkopf 8. Wesentlich ist hierbei, dass die Schabung bzw. die Materialausnehmung 6 nicht zu lang bzw. zu tief ausgebildet sein darf, da sich an den Materialerhebungen 7 ansonsten Risse bilden. Ferner ist die Materialausnehmung 6 nicht zu flach bzw. zu kurz auszubilden, da ansonsten der Gelenkkopf 8 nicht ausreichend im Sicherungsbereich 5 fixiert ist.

In diesem Ausführungsbeispiel weist der zweite Abschnitt 3 und der Angriffsbereich 4 die Geometrie einer M6-Schraube auf. Der erste Abschnitt 2 weist einen Halsdurchmeter von 4 mm auf. Bei dieser Geometrie hat sich eine Länge der Materialausnehmung 6 von 1 mm als ideal herausgestellt. Die zulässige Toleranz liegt in diesem Ausführungsbeispiel bei ± 0,3 mm. Auch ist es denkbar, den zweiten Abschnitt 3, anstelle mit einem Gewinde, mit einem Nietschaft bzw. als Nietschaft auszubilden.

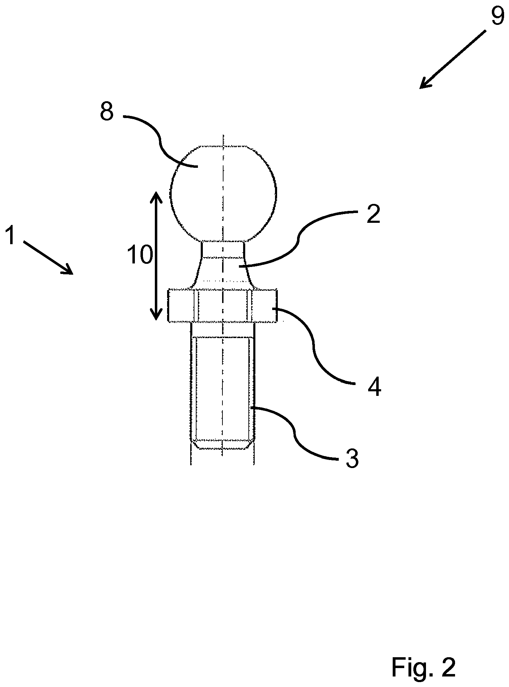

Fig. 2 zeigt eine Seitenansicht eines Gelenkzapfens 9 in einer schematischen Darstellung. An dem ersten Abschnitt 2 des Gelenkköpers 1 ist ein Gelenkkopf 8 angebracht. Der Gelenkkopf 8 weist die Form eines Kugelabschnitts bzw. Kugelsegments auf. In besonders vorteilhafter Weise ist der aus Kunststoff hergestellte Kugelkopf spritzgusstechnisch an den Sicherungsbereich 5 des ersten Abschnitts 2 angeformt. Um den geforderten Kippwinkel von ± 20° des Gelenkzapfens 9 in einer Gelenkpfanne zu realisieren, muss der erste Abschnitt 2 des Gelenkkörpers 1 entsprechend lang und schmal ausgebildet sein. Im hier dargestellten Ausführungsbeispiel weist der erste Abschnitt 2 einen Durchmesser von 4 mm auf.

Der Abstand 10 von der Mitte des Gelenkkopfes 8 zur Auflage der Angriffsbereich 4 beträgt in diesem Ausführungsbeispiel 12 mm. Durch diese Abmessung ist der geforderte Kippwinkel des Gelenkzapfens 9 sichergestellt.

Die Figuren 1 und 2 lassen deutlich erkennen, dass der Gelenkzapfen 9 bzw. der Gelenkkörper 1 mit seinem oberen Bereich deutlich in den Gelenkkopf 8 hineinragt.

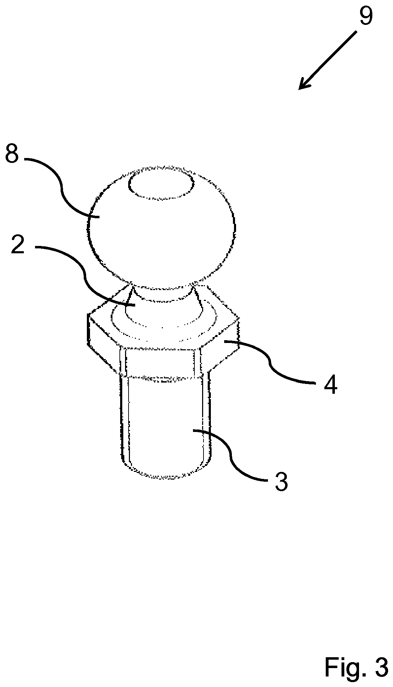

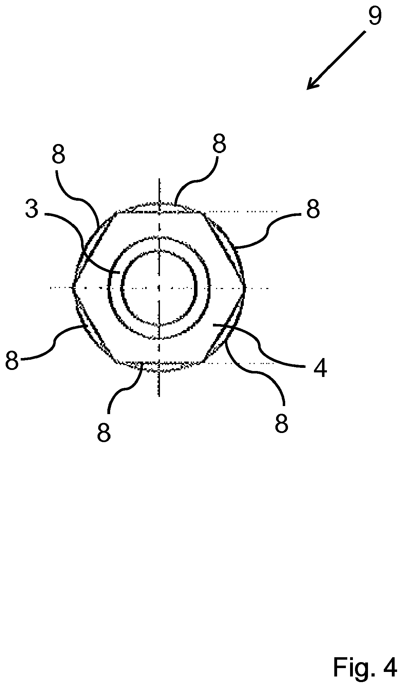

Fig. 3 zeigt in einer perspektivischen, schematischen Darstellung den Gelenkzapfen 9 aus Fig. 2. Fig. 4 zeigt eine Draufsicht auf den erfindungsgemäßen Gelenkzapfen 9 der Figuren 2 und 3. Zur Vermeidung von Wiederholungen sei an dieser Stelle auf die voranstehenden Ausführungen der Figuren 1 und 2 verwiesen.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der Vorrichtung lediglich zur Erörterung der beanspruchten Lehre dient.

### Bezugszeichenliste

- 1: Gelenkkörper
- 2: erster Abschnitt
- 3: zweiter Abschnitt
- 4: Angriffsbereich
- 5: Sicherungsbereich
- 6: Materialausnehmung
- 7: Materialerhebung
- 8: Gelenkkopf
- 9: Gelenkzapfen
- 10: Abstand

## Patentansprüche

1. Gelenkzapfen (9), insbesondere zur Sensoransteuerung in einem Fahrzeug, mit einem einen ersten Abschnitt (2) und einen zweiten Abschnitt (3) aufweisenden Gelenkkörper (1), wobei an dem ersten Abschnitt (2) des Gelenkkörpers (1) ein Gelenkkopf (8) angeordnet ist, wobei der Gelenkkörper (1) aus Metall und der Gelenkkopf (8) aus Kunststoff hergestellt ist und wobei an dem ersten Abschnitt (2) ein Sicherungsbereich (5) ausgebildet ist, an dem der Gelenkkopf (8) verdreh- und abzugssicher angeordnet ist
**dadurch gekennzeichnet, dass** der erste Abschnitt (2) zumindest bereichsweise hohl ausgebildet ist, dass der hohl ausgebildete erste Abschnitt (2) an seiner Stirnseite mit einem Stempel gestaucht ist und dass die sich dadurch ergebende Wulst als Hinterschneidung wirkt, an der der Gelenkkopf (8) verdreh-und abzugssicher angeordnet ist.

2. Gelenkzapfen nach Anspruch 1, **dadurch gekennzeichnet, dass** der Gelenkkörper (1) aus Stahl hergestellt ist.

3. Gelenkzapfen nach Anspruch 1 oder 2, **dadurch gekennzeichnet, dass** der Gelenkkörper (1) zum Schutz gegen Korrosion zumindest teilweise oberflächenbeschichtet ist.

4. Gelenkzapfen nach einem der Ansprüche 1 bis 3, **dadurch gekennzeichnet, dass** zwischen dem ersten Abschnitt (2) und dem zweiten Abschnitt (3) ein Angriffsbereich (4) für ein Werkzeug - insbesondere ein Sechskant - oder eine mit einem Anschraubgegenstück korrespondierende Verdrehsicherung ausgebildet ist.

5. Gelenkzapfen nach einem der Ansprüche 1 bis 4, **dadurch gekennzeichnet, dass** der zweite Abschnitt (3) ein Außengewinde aufweist.

6. Gelenkzapfen nach einem der Ansprüche 1 bis 5, **dadurch gekennzeichnet, dass** der Gelenkkopf (8) die Form einer Kugel, eines Kugelabschnitt, eines Ellipsoids oder eines Ellipsoidabschnitts aufweist.

7. Gelenkzapfen nach einem der Ansprüche 1 bis 6, **dadurch gekennzeichnet, dass** der Gelenkkopf (8) an dem ersten Abschnitt (2) spritzgusstechnisch oder sintertechnisch angeformt ist.

8. Gelenkzapfen nach einem der Ansprüche 1 bis 6, **dadurch gekennzeichnet, dass** der Gelenkkopf (8) auf den ersten Abschnitt (2) aufgepresst oder in den ersten Abschnitt (2) eingebettet ist.

9. Gelenkzapfen nach einem der Ansprüche 1 bis 8, dass der Gelenkkopf (8) aus Polyoxymethylen (POM), Polyamid (PA), Polyphthalamiden (PPA), Perfluorkautschuk (FFKM bzw. FFPM) oder Polyimiden hergestellt ist.

10. Gelenkzapfen nach einem der Ansprüche 1 bis 9, **dadurch gekennzeichnet, dass** an dem ersten Abschnitt (2) mindestens eine Materialausnehmung (6), insbesondere ein Einschnitt oder eine Kerbe, und eine sich an die Materialausnehmung (6) anschließende Materialerhebung (7) ausgebildet sind, die den Sicherungsbereich (5) definieren.

11. Gelenkzapfen nach Anspruch 10, **dadurch gekennzeichnet, dass** die Materialausnehmung (6) aus dem ersten Abschnitt (2) herausgeschabt ist, wobei das dadurch aufgestauchte Material die Materialerhebung (7) bildet.

## Claims

1. Pivot stud (9), in particular for sensor control in a vehicle, having a pivot member (1) which has a first portion (2) and a second portion (3), wherein a pivot head (8) is arranged on the first portion (2) of the pivot member (1), wherein the pivot member (1) is produced from metal and the pivot head (8) is produced from plastics material, and wherein on the first portion (2) there is formed a securing region (5), on which the pivot head (8) is arranged so as to be resistant to torsion and being pulled off,
**characterised in that** the first portion (2) is constructed at least partially in a hollow manner, **in that** the hollow first portion (2) is compressed at the end side thereof with a stamp and **in that** the bead which is thereby produced acts an undercut on which the pivot head (8) is arranged so as to be resistant to torsion and being pulled off.

2. Pivot stud according to claim 1, **characterised in that** the pivot member (1) is produced from steel.

3. Pivot stud according to claim 1 or 2, **characterised in that** the pivot member (1) is at least partially surface-coated for protection against corrosion.

4. Pivot stud according to any one of claims 1 to 3, **characterised in that** there is formed between the first portion (2) and the second portion (3) an engagement region (4) for a tool - in particular a hexagon wrench - or a torsion prevention means which corresponds to a screwing counter-piece.

5. Pivot stud according to any one of claims 1 to 4, **characterised in that** the second portion (3) has an outer thread.

6. Pivot stud according to any one of claims 1 to 5, **characterised in that** the pivot head (8) is in the form of a sphere, a spherical portion, an ellipsoid or an ellipsoid portion.

7. Pivot stud according to any one of claims 1 to 6, **characterised in that** the pivot head (8) is formed on the first portion (2) using injection-moulding technology or sintering technology.

8. Pivot stud according to any one of claims 1 to 6, **characterised in that** the pivot head (8) is pressed on the first portion (2) or embedded in the first portion (2).

9. Pivot stud according to any one of claims 1 to 8, **characterised in that** the pivot head (8) is produced from polyoxymethylene (POM), polyamide (PA), polyphthalamide (PPA), perfluorinated rubber (FFKM or FFPM) or polyimides.

10. Pivot stud according to any one of claims 1 to 9, **characterised in that** there are constructed in the first portion (2) at least one material recess (6), in particular an incision or a notch, and a material protrusion (7) which adjoins the material recess (6) which define the securing region (5).

11. Pivot stud according to claim 10, **characterised in that** the material recess (6) is scraped out of the first portion (2), wherein the material which is thereby compressed forms the material protrusion (7).

## Revendications

1. Pivot d'articulation (9), plus particulièrement pour le contrôle d'un capteur dans un véhicule, avec un corps d'articulation (1) comprenant une première portion (2) et une deuxième portion (3), une tête d'articulation (8) étant disposées sur la première portion (2) du corps d'articulation (1), le corps d'articulation (1) étant constitué de métal et la tête d'articulation (8) étant constitué de matière plastique et une partie de fixation (5), sur laquelle est disposée la tête d'articulation (8) avec une protection anti-rotation et anti-retrait, étant réalisée sur la première portion (2)
**caractérisé en ce que** la première portion (2) est réalisée de manière creuse au moins à certains endroits, **en ce que** la première portion (2) réalisée de manière creuse est refoulée au niveau de sa face frontale avec un poinçon et **en ce que** le bourrelet qui en résulte agit comme une contre-dépouille, contre laquelle la tête d'articulation (8) est disposée avec une protection anti-rotation et anti-retrait.

2. Pivot d'articulation selon la revendication 1, **caractérisé en ce que** le corps d'articulation (1) est constitué d'acier.

3. Pivot d'articulation selon la revendication 1 ou 2, **caractérisé en ce que** le corps d'articulation (1) est au moins partiellement muni d'un revêtement de surface pour une protection contre la corrosion.

4. Pivot d'articulation selon l'une des revendications 1 à 3, **caractérisé en ce que**, entre la première portion (2) et la deuxième portion (3), est réalisée une partie d'attaque (4) pour un outil, plus particulièrement une clé à six pans, ou une protection anti-rotation correspondant à une contre-pièce de vissage.

5. Pivot d'articulation selon l'une des revendications 1 à 4, **caractérisé en ce que** la deuxième portion (3) comprend un filetage externe.

6. Pivot d'articulation selon l'une des revendications 1 à 5, **caractérisé en ce que** la tête d'articulation (8) présente la forme d'une sphère, d'une portion de sphère, d'une ellipsoïde ou d'une portion d'ellipsoïde.

7. Pivot d'articulation selon l'une des revendications 1 à 6, **caractérisé en ce que** la tête d'articulation (8) est formée par moulage par injection ou par frittage sur la première portion (2).

8. Pivot d'articulation selon l'une des revendications 1 à 6, **caractérisé en ce que** la tête d'articulation (8) est pressée sur la première portion (2) ou est intégrée dans la première portion (2).

9. Pivot d'articulation selon l'une des revendications 1 à 8, **caractérisé en ce que** la tête d'articulation (8) est constituée de poloxyméthylène (POM), de polyamide (PA), de polyphtalamides (PPA), de caoutchouc perfluoré (FFKM ou FFPM) ou de polyimides.

10. Pivot d'articulation selon l'une des revendications 1 à 9, **caractérisé en ce que**, sur la première portion (2) sont réalisés au moins un évidement de matériau (6), plus particulièrement une échancrure ou une encoche, et une surélévation de matériau (7) se raccordant à l'évidement de matériau (6), qui définissent la partie de fixation (5).

11. Pivot d'articulation selon la revendication 10, **caractérisé en ce que** l'évidement de matériau (6) est raclé à partir de la première portion (2), le matériau ainsi refoulé formant la surélévation de matériau (7).
